# EUROPEAN PATENT SPECIFICATION

(11) **EP 2 150 921 B1**
(45) Date of publication and mention of the grant of the patent: **18.05.2011**
(21) Application number: 08760266.0
(22) Date of filing: 30.05.2008
(51) Int. Cl.: G06K 15/10

(54) **METHOD AND APPARATUS OF VARIABLE DOT ON DOT PRINTING**
VERFAHREN UND VORRICHTUNG FÜR VARIABLES PUNKT-AUF-PUNKT-DRUCKEN
PROCÉDÉ ET APPAREIL D'IMPRESSION POINT-À-POINT VARIABLE

(30) Priority: 31.05.2007 EP 07109313
(43) Date of publication of application: 10.02.2010
(73) Proprietor: Mutoh Belgium NV, 8400 Oostende (BE)
(72) Inventor: DEFEVER, Serge, B-8460 Oudenburg (BE); SCHAUM, Martin, B-8670 Oostduinkerke (BE)
(74) Representative: pronovem
(86) International application number: PCT/EP2008/056676
(87) International publication number: WO 2008/145723

(56) References cited:
- US-A1- 2003 103 102
- US-A1- 2003 202 215

## Description

### Field of the Invention

The present invention is related to dot matrix printing methods and dot matrix printers with variable dot size. Particularly, the present invention is related to a multi-pass ink jet printing method and ink jet printer with variable dot size.

### State of the Art

High speed printing with ink jet printers is nowadays limited by the incapability of the used ink to dry fast enough. Furthermore, stepping mismatches (variations in paper feed steps) and miss-firing nozzles show up in the printed image via ink bleeding and various types of banding. These image defect phenomena show a repetitive pattern and/or a geometry which is easily recognizable by the human eye.

An ink jet printer has a print head comprising a plurality of nozzles from where ink is fired onto a printable medium. The nozzles are generally ordered in one or more arrays. The print head moves, relative to the medium, along a fast scanning direction, generally coinciding with the width of the printable medium. The print head also moves relative to the printable medium in a slow scanning direction, generally perpendicular to the fast scanning direction. Movement in the slow scanning direction is used for feeding the printable medium relative to the print head and occurs in discrete steps, i.e. after a fast scan, the print head moves relative to the printable medium in the slow scanning direction towards a consecutive position after which a fast scan may be executed. A fast scan is generally referred to as a pass. Ink may be fired from the nozzles during a pass. Ink fired repetitively from one (a same) nozzle during a pass, appears on the printable medium along a line. This line is called a raster line.

The ink dots are recorded according to information contained in print data. The print data is subdivided in picture elements or pixels. The print data may contain for each pixel information on the colour channels, the dot size, etc.

For the purpose of disclosing the present invention, print data refers to data containing information that can readily be used for printing. It does not refer to image data.

On a traditional dot matrix printer, a family of printers to which an ink jet printer belongs, an image is recorded (formed) on a printable medium by printing a series of complementary rectangularly shaped stripes (also called bands or swaths). These rectangular stripes are either printed adjacent to each other, or overlap to a certain degree. The latter case is often referred to as multi-pass printing. In the overlap portion of a band, raster lines in between existing raster lines are printed so as to increase the resolution of the printed image. This is referred to as interlace printing.

If the previously printed band is still wet, there can be a flow of the ink from the last printed band to the previous one (referred to as ink bleeding). This flow creates a region in the last printed band, adjacent to the previously printed band, with a low ink concentration, and a region in the previously printed band with a high ink concentration. The result is the occurrence of clearly visible stripes in the print, also called banding. Furthermore, the adjacent band printing technique needs an exact step-adjust. When two bands overlap the ink concentration in the overlapped zone increases and also causes banding. In case of a spacing between two adjacent bands, this gap is also clearly visible.

Ink jet printing equipment manufacturers have put forward a number of dot printing strategies in order to overcome the phenomenon of banding. It is known from US patent application 2003/202215 to apply a multi-pass printing mask on the print data which results in an ink density distribution having a trapezoidal shape. Towards the border of the band, the recorded ink density is gradually decreased. The ink dots that are masked (not recorded) in one pass, are recorded in subsequent passes.

Ink density distributions in the prior art are achieved by dithering methods that set a given number of dots per raster line. In first methods, pixels are recorded in one pass or in a following pass. This has two major disadvantages:
- there still may be a horizontal geometry (i.e. in fast scan direction) and
- there may occur abrupt changes in ink density in one print pass (e.g. the dot is on or off).
Depending on the accuracy of the dot placement from pass to pass, a horizontal banding is visible when the dots recorded in subsequent passes do not match exactly the dot positions left open in the earlier pass. This leads to a structural banding, because along a raster line some places are left uncovered while other places have a too high ink concentration. Such structural banding may occur when the feed step is not exact enough, when not every nozzle of the print head behaves identically, as dots on a same raster line are printed with a different print head nozzle in a different pass because of the print head movement, or when printing bidirectionally, in which dots of the same line are printed in different directions and with different colour order deposition.

In second methods of the prior art, pixels are recorded in a multi level fashion by recording multiple dots at a same pixel location. The multiple dots are then filtered by a print mask for spreading the printing thereof over multiple passes. Such methods however have the drawback of being extremely slow.

An additional problem of ink jet printing methods is the coalescence of ink drops. Neighbouring drops deposited in different subsequent passes tend to combine to a larger drop, although this is not desired. Coalescence leads to the migration of ink drops to neighbouring places, leaving behind a spot of lower ink density, which is undesired, especially in prints having large areas of one colour, or in prints arranged to be back-lit.

### Aims of the Invention

The present invention aims to provide at least an alternative dot matrix printing method that reduces structural banding and/or coalescence in prints. It is an object of the present invention to provide a dot matrix printing method, that additionally allows for maintaining high printing speeds and/or improves image quality, thereby overcoming the drawbacks of prior art methods. The present invention equally aims to provide an apparatus implementing said method.

### Summary of the Invention

The present invention is related to dot matrix printing methods and to dot matrix printers, as set out in the appended claims. According to a first aspect of It is known from US 2003/103102 to provide a print head that is capable of producing a plurality of dot types of different size for at least one ink colour on a print medium using the nozzles. The print signal contains multiple bits per pixel so as to allow each pixel to be printed in multi tones. the invention, there is provided a method of dot matrix printing comprising a first step of masking print data. The masking step comprises applying a mask to a portion of print data to obtain from said portion masked print data and unmasked print data. The masked print data is arranged to be of larger amount in a first region compared to a second region of the portion of print data. Hence, print data in a first region of the portion of print data is masked more per unit area (is masked more intensely) than in a second region of the portion of print data. The method comprises a second step of recording on a medium first ink dots in a first pass of a print head relative to the medium. The first ink dots relate to the unmasked print data. A third step of the method comprises recording on the medium second ink dots in one or more following passes of the print head relative to the medium. The second ink dots relate to the masked print data.

In methods of the invention, the step of masking comprises, for one or more pixels of said portion of print data, masking a portion of the pixel dot size to obtain an unmasked pixel dot size of smaller size than the pixel dot size and at least one masked pixel dot size. Hence, the total (mono-colour) pixel size is decomposed into one or more masked sizes, which form part of the masked print data and an unmasked size, which forms part of the unmasked print data.

Methods of the invention are directed to multi dot size printing. Hence the first ink dots comprise ink dots of different size. In addition, or alternatively, the second ink dots comprise ink dots of different size.

According to the invention, the first and the second ink dots relating to a same pixel are superposed.

Preferably, at least some of the first ink dots are smaller in size than the size of second ink dots of corresponding pixels.

Preferably, the step of arranging the masked print data in the first region to be of larger amount compared to the masked print data in the second region is obtained by or comprises said step of masking a portion of the pixel size of the one or more pixels. Said decomposing the pixel size of one or more pixels is hence performed such that print data in the first region of the portion of print data is masked more per unit area than in the second region of the portion of print data. More preferably, it is obtained solely by the step of decomposing the dot size of one or more pixels.

Preferably, the first region is interposed between the second region and the downstream border of data in a pass. Preferably, in the first region, the print data is gradually and/or increasingly masked from the border with the second region towards said downstream border.

Preferably, the method according to the invention comprises the step of varying in the first region the amount of masking of the print data along the direction of a pass of the print head. The variation is preferably performed according to a predefined profile, preferably a cyclic profile such as a sine. More preferably, said predefined profile comprises a repeating pattern, the pattern having a length of multiple pixels, preferably 6, 8, 10 or more pixels. More preferably, the length of the repeating pattern is at least 100 pixels, most preferably at least 200 pixels.

Preferably, the method according to the invention is applied to colour printing with multiple colour channels. In the latter case, the step of masking a portion of the pixel size comprises, for each of one or more colour channels of said multiple colour channels masking a portion of the pixel size relating to the corresponding colour channel. Hence, decomposing the size of one or more pixels preferably comprises decomposing the size into masked sizes of different colour channels of said multiple colour channels and unmasked sizes of different colour channels of said multiple colour channels. More preferably, unmasked sizes of different colour channels of the same pixel are as uniform as possible in size. In case said unmasked sizes of different colour channels of the same pixel have different sizes, said different unmasked sizes are preferably applied randomly to said different colour channels.

Preferably, after the step of recording the first ink dots (the unmasked print data), the unmasked print data is subtracted from the print data. The step of recording the second ink dots (the masked print data) preferably comprises the steps of shifting said mask over the print data and applying said mask to at least the masked print data.

The method of the invention may be used for ink jet printing with thermally curable ink. The method may alternatively be used for ink jet printing with UV-curable ink.

According to a second aspect of the invention, there is provided a dot matrix printer comprising: means for receiving print data, a print head arranged for performing relative to a medium a fast scan in a first direction for recording ink dots on the medium, and a slow scan in a second direction for feeding the medium relative to the print head and means for masking print data as set out in any one of the claims 1 to 10. The dot matrix printer according to the invention is arranged to record ink dots of different size during a single fast scan of the print head.

The dot matrix printer of the invention may be e.g. an ink-jet printer with thermally curable ink. It may be configured to record UV-curable ink (cured by UV radiation). UV curable ink may be cured after each fast scan.

### Brief Description of the Drawings

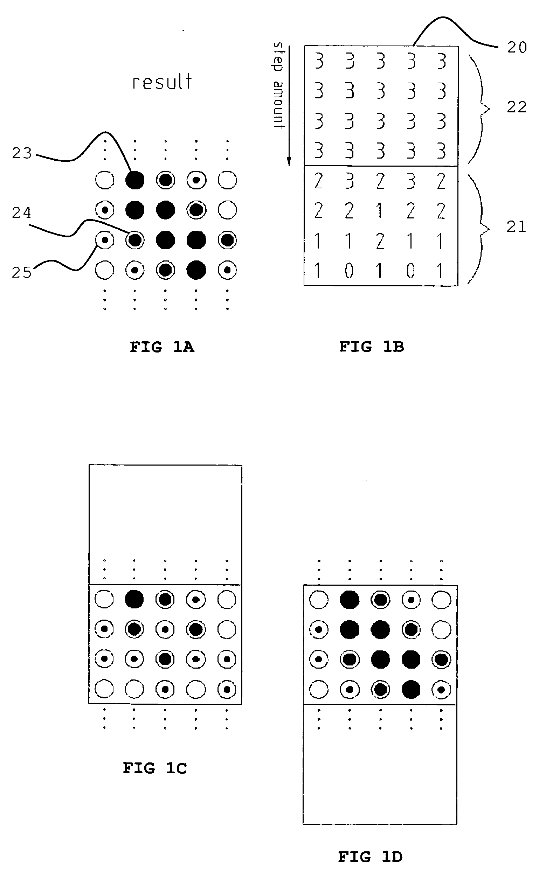

Figures 1A-D represent an embodiment of printing methods of the invention. Figure 1A represents a portion of print data as an image to be printed. Figure 1B represents the mask that is applied to the portion of print data, wherein the mask masks a portion of the dot sizes of some pixels. Figures 1C and D represent respectively a first and a second pass of the print head, in which the mask is shifted over the portion of print data by the feed step.

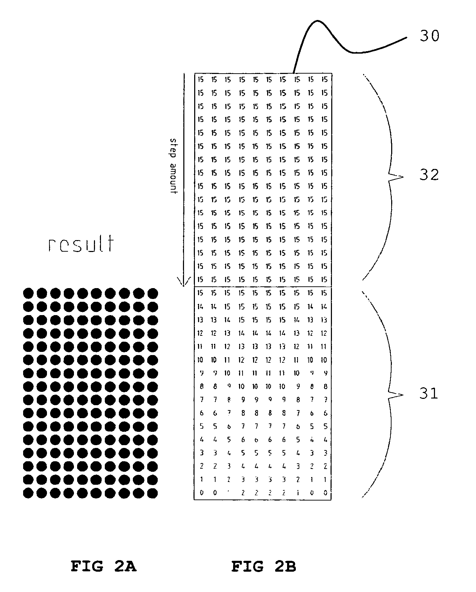

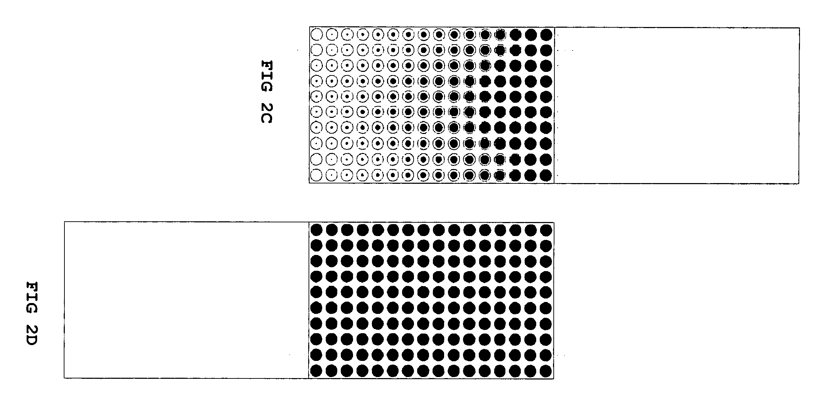

Figures 2A-D represent another embodiment of printing methods of the invention. Figure 2A represents a portion of print data as an image to be printed. Figure 2B represents the mask that is applied to the portion of print data, wherein the mask masks a portion of the dot sizes of some pixels. Figures 2C and D represent respectively a first and a second pass of the print head, in which the mask is shifted over the portion of print data by the feed step.

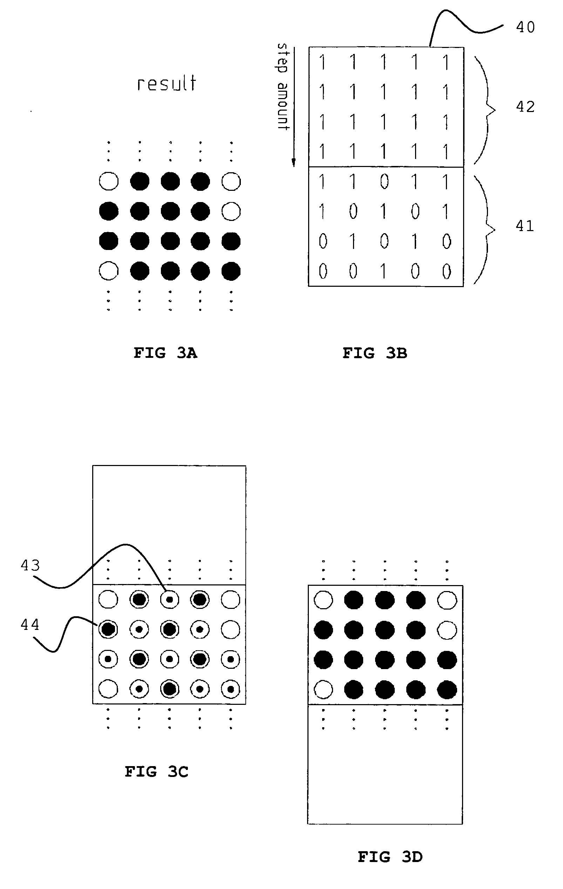

Figures 3A-D represent still another embodiment of printing methods of the invention. Figure 3A represents a portion of print data as an image to be printed. Figure 3B represents the mask that is applied to the portion of print data, wherein the mask masks a varying portion of the dot sizes of the pixels. Figures 3C and D represent respectively a first and a second pass of the print head, in which the mask is shifted over the portion of print data by the feed step.

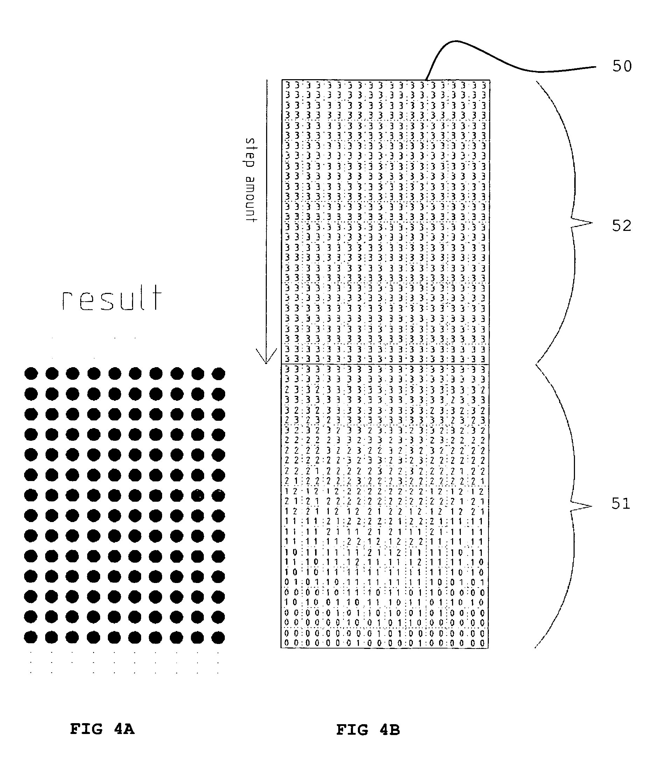

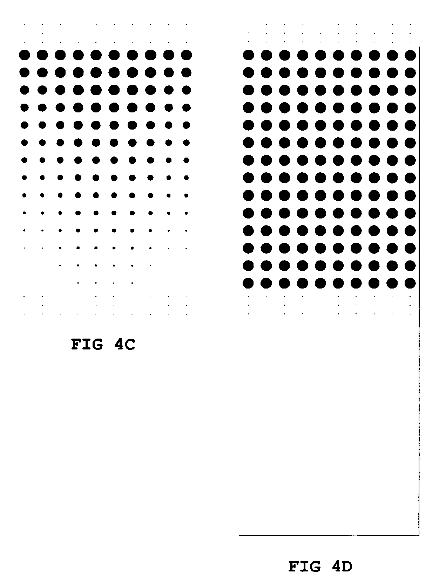

Figures 4A-D represent an embodiment of printing methods of the invention making use of four colour channels. Figure 4A represents the total dot size of a portion of print data. Figure 4B represents the mask that is applied to the portion of print data, wherein the mask masks for each colour channel a portion of the dot sizes of some pixels. Figures 4C and D represent respectively a first and a second pass of the print head, in which the mask is shifted over the portion of print data by the feed step.

### Detailed Description of the Invention

Embodiments of the present invention will now be described in detail with reference to the attached figures, the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, left, right, over, under and the like in the description and the claims are used for descriptive purposes and not necessarily for describing relative positions. The terms so used are interchangeable under appropriate circumstances and the embodiments of the invention described herein can operate in other orientations than described or illustrated herein. For example, "left" and "right" of an element indicates being located at opposite sides of this element.

It is to be noticed that the term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, A and B are relevant components of the device.

Where numerical values are given with regard to limitations of a quantity, or the outcome of a measurement, for the assessment of those values, account shall be taken of variations due to impurities, methods used to determine measurements, human error, statistical variance, etc.

The method of the invention reduces the occurrence of banding phenomena by applying a dedicated mask (a filter) to the print data. For ease of understanding and although the exact hardware and/or software implementation may differ, the mask is applied to a portion of the print data, e.g. a band. The mask masks some of the print data and the remainder of the portion of print data is not masked. In a current pass of the print head, only the unmasked print data is recorded, while the masked print data is recorded in one or more subsequent passes.

The aim of masking in the present invention is to vary the ink density recorded in a single pass, according to a predetermined profile. In one or more subsequent passes, the lacking (masked) ink density is recorded. For the purpose of explaining the present invention, the ink density is defined as the amount of ink recorded on a medium per unit area. The variation in recorded ink density comes in addition to the spreading of ink density in classical multi-pass printing. According to the invention, the ink density may be gradually decreased towards a border of the band, typically the downstream border in the slow scan direction. This way of printing creates a blurred band border, so that the transition between consecutive bands is not easily distinguishable. Hence, banding is reduced. Furthermore, by spreading the recorded ink over two or more passes, faster ink drying characteristics can be obtained and ink coalescence may be reduced.

The band smoothing filters of the prior art works by masking some of the print data within a band, such that it is not recorded in a current pass, but in a following pass. A characteristic of these methods is that they work binary, which means that whole dots (ink drops) are masked or unmasked causing abrupt ink density changes in one pass. This makes them sensitive to structural banding and coalescence.

In the present invention, smoothing is (additionally) achieved by decomposing ink dots in dots of smaller and preferably different size and superposing the smaller size ink dots during multi-pass printing to obtain an ink dot of desired size. The benefit is twofold. First, abrupt changes in ink density between neighbouring dots can be avoided in each pass, making the method less sensible to structural banding. Secondly, by printing a dot of a smaller size in a first pass, the corresponding dots superposed in subsequent passes tend to combine with the dots laid down in the first pass, instead of coalescing with neighbour dots and leaving the dot position blank. The method of the invention is applied to multi dot size printers, also referred to as variable dot printers.

Multi dot size printers have a print head which allows to record ink dots of different size in a single pass. Larger size ink dots are typically obtained by firing consecutively a number of ink drops, which will merge to a larger drop before reaching the print medium. Figures 1A-D illustrate the printing method of the invention in an embodiment for a print head with three ink dot sizes. The largest dot size 23 in the example of figure 1 may be decomposed in a superposition of the smallest dot 25 and the medium dot 24. A medium dot size 24 can be decomposed by a superposition of two small dots 25. The image to be printed in figure 1A comprises all three different dot sizes. The circles which are not filled are not recorded. A mask (filter) 20 according to the present embodiment is shown in figure 1B. The mask 20 is 2-bit, as all four possibilities (including no dot) are provided, although this is not a strict necessity due to the dot superposition principle. The values in the mask 20 are interpreted as the maximal allowable dot size that may be recorded in a pass. When the print data contains a smaller dot or no dot for a given pixel, then only that smaller dot or no dot is respectively recorded. On the other hand, when the print data indicates a larger dot size to be printed than allowed by the mask 20, then only the dot size allowed by the mask 20 is recorded. The recorded size is afterwards subtracted from the size indicated in the print data, and the remaining dot size is recorded in one or more following passes. In the mask 20, the numbers "1" to "3" refer to the smallest to largest dot size respectively.

In the embodiment of figure 1, the feed step is four raster lines and the height of the mask is eight raster lines. Hence, the mask 20 is applied twice to each pixel in the print data of figure 1A. Figure 1C shows what is printed in the first step, when a first part 21 of the mask is applied to the print data. Figure 1D shows the obtained print after the second pass, when the part 22 of the mask 20 is applied. The print data can be entirely recorded in two passes.

In the context of the invention, masking the print data hence also comprises masking a portion of the dot sizes of the pixels in the print data. The dot size of a pixel is adjusted (i.e. limited) according to the value set by the mask, which is referred to as the unmasked dot size. If the print data indicates a larger dot size, then the remainder of the dot size, referred to as the masked dot size, is recorded in one or more following passes of the print head. The total number of passes that are needed to record one given dot size depends on the mask value (s) in the one or more following passes. In each pass in which the dot (pixel) is scanned, a dot size not larger than the size indicated by the corresponding location in the mask may be recorded.

The filtering profile in the mask of figure 1 clearly comprises a first part or region 21 with high filtering and a second part or region 22 with low or no filtering. The first region gradually decreases the ink density to be recorded towards the border of the band (see fig. 1C). For the mask 20 of figure 1B, two passes suffice for recording the image of fig. 1A. After the first pass (fig. 1C), the recorded data is subtracted from the image data. In a second pass, as shown in fig. 1D, the mask - and hence the print head - is shifted by four raster lines. Each raster line is thus scanned twice.

Figure 2B shows an embodiment of a mask 30 for a print head that allows to record ink dots of 15 different sizes. Smaller dots are superposed to obtain a larger dot size; the superposition in this particular example is assumed to linearly increase the dot size, e.g. dot size #15 may be decomposed in a superposition of dot size #8 and dot size #7. The filtering profile of mask 30 allows to record each line of the print data in two passes. Each line of figure 2A is scanned twice. Between the first and the second pass, represented respectively in figures 2C and 2D, the print head and the mask are shifted over a feed step of sixteen raster lines. The mask 30 is 32 lines high and may be divided in a first part 31, which applies a filtering profile to gradually decrease the recorded ink density towards the (downstream) border and a second part 32, which applies no filtering (all mask values in part 32 are set to #15, i.e. the largest dot size). Hence, application of part 32 allows to record the print data masked in the first pass.

In another embodiment, printing methods of the invention are applied to multi dot size printers to obtain ink dot sizes larger than the maximal dot size obtainable in a single pass or to obtain different dot sizes that are not provided by the print head. This is shown in figures 3A-3D. All dots of the eventual image (figure 3A) are decomposed in a superposition of a small dot 43 and a larger dot 44, which requires that each raster line is scanned at least twice. In the case of figure 3, every raster line is scanned twice and the mask 40 represented in figure 3B is 1-bit: it indicates whether the maximal dot size to be recorded in a pass is a large dot (represented by "1" in mask 40) or a small dot (represented by "0"). Hence, in a first part 41 of the mask 40, corresponding to the part of mask 40 that is applied during a first pass to the portion of print data (see figure 3C), it is decided whether a small or a large dot is recorded first. In a second pass (see figure 3D), the mask is shifted by a feed step of four raster lines over the print data, and a part 42 of mask 40 is applied to the same portion of print data. The remainder of the print data is printed in a second pass. As the part 42 allows for all pixels to record large dot sizes, the image of figure 3A can be completed.

The print masking according to the invention has major advantages:
- zones of high ink concentration recorded in the current pass advantageously do not touch zones of high ink concentration recorded in a previous pass,
- the banding created by a wrong step adjust is averaged over the whole overlapped zone.

In the embodiment illustrated in figure 3, the mask additionally applies a "band shaping" filter. A band shaping filter "shapes" the borders of a band that lie along the fast scan direction (i.e. the longitudinal border) according to a predefined profile (e.g. a sinus). Put in other words, the band shaping filter varies the recorded ink density according to a predefined profile (e.g. a repeating pattern) along the fast scan direction, in a border region of the band. The pattern unit (the unit that is repeated) is preferably multiple pixels large in size. The size refers to the length (width) measured along the longitudinal border. The pattern hence has preferably a length of at least 6 pixels large, more preferably at least 10 pixels. Even more preferably, the length of the pattern is at least 100 pixels, with a length of at least 200 pixels being particularly preferred. Wavy patterns are preferred, in particular sinusoidally shaped patterns. The pattern can have the shape of a sawtooth or a triangle wave.

This is clearly visible in figure 2C, where the ink density in the middle of the band is higher than close to the lateral edges. For wider images, for example, the mask 30 may be juxtaposed, resulting in the ink density varying more or less sinusoidally along a raster line, in a (downstream) border region of the band.

Band shaping in the present invention hence may be achieved by dithering methods which not only set dots on or off, but decompose a dot of given size into dots of smaller size and superpose the dots of smaller size in multiple passes. In each pass a portion of the full size can be recorded and superposed on the already recorded size.

An advantage of a band shaping filter is that structural banding is less recognizable for the human eye, because the defects occur along lines which have the same shape as the profile used for band shaping, i.e. they are not straight lines. The band shaping filter results in recorded bands having effective borders being no longer parallel to the fast scan direction. The profile used for the band shaping technique can be according to any function (e.g. sine), can be repetitive or not, etc.

For colour ink jet printing, the filtering according to the invention may be applied to each colour channel (e.g. cyan, yellow, magenta and black), or only to some of the available colour channels (one or more). The total number of (superposed) dot sizes for all colour channels increases when filtering is performed per colour channel. By way of example, in case of four colour channels, and three dot sizes per colour channel, a total of twelve (=4x3) superposed dot sizes are available for choosing a filtering profile (in the assumption that dot sizes can be linearly superposed).

Hence, a monochrome mask (can be 1-bit, 2-bits or more) may be set up for one colour channel, for multiple colour channels, or for each one of the available colour channels. The mask represents for all pixels it covers, the maximal dot size of a particular colour channel that can be recorded in one pass. In some cases it may be sufficient to use the same mask for all colour channels. Hence, the filtering profile is identical for all colour channels in the latter case.

In another embodiment, and depending on the scan speed, the type of printable medium, the amount of ink fired per nozzle and other factors, the ink density for one or some colour channels is filtered more than for others. In this case each colour channel gets a different mask.

In still another embodiment, a composed filtering profile (mask), superposed for all colour channels is determined first. The composed filtering mask comprises mask values which define the maximal dot size, which is intended to be composed of different colour channels. Next, each composed mask value (each maximal dot size), superposed for all colour channels, is decomposed in the different colour channels as uniformly as possible to obtain a filtering mask for each of the available colour channels.

An example is given in what follows. Considering the case of four colour channels and three dot sizes per colour channel (size 1-3), then the maximal superposed dot size is 12 (=4x3). A superposed mask dot size 9, for example, may be formed by superposition of dot sizes of the four colour channels in a most uniform way: 3+2+2+2 or 2+3+2+2 or 2+2+3+2 or 2+2+2+3. Hence, a composed mask dot size 9 is decomposed in the available colour channels as uniformly as possible. The colour channel which is allotted the mask dot size 3 may be chosen randomly. Likewise, a composed dot size 3 is decomposed in dot sizes of three colour channels: 1+1+1. The colour channel which is completely masked for that pixel may be chosen randomly.

The above example is illustrated in figures 4 A-D. First, a composed filtering mask is determined, defining for each pixel a composed mask value, which filters the superposition of all the colour channels. Thereafter, the composed mask values are decomposed in the available colour channels to obtain the masks shown in figure 4B. The mask 50 of figure 4B hence comprises for each pixel four mask values (the four values within each dotted square) corresponding to four colour channels (e.g. CYMK). Three dot sizes are considered for each colour channel, namely of size #1 to #3. A mask value of "0" indicates full masking (hence, no dot of the corresponding colour channel is recorded in a given pass). The height of mask 50 is equal to two feed steps, hence the mask 50 may be divided in a first part 51 which will perform first filtering in a first pass and a second part 52 which completes the recording of the filtered print data in a second pass. Figures 4C and D represent the recorded dot sizes (superposed dots of all four colour channels) for the first and second pass respectively.

The filtering mask may be considered as divided in regions. A most simple mask has a first region with high masking and a second region with no or low masking (filtering). Both regions (and hence the mask) may extend along the entire length of the band (the longitudinal direction of a band coincides with the fast scan direction).

After having recorded one band, the effectively recorded dots (and dot sizes) are subtracted from the print data, leaving the dots (and dot sizes) that still are to be recorded. Subsequently, the mask(s) is (are) shifted in slow scan direction over the print data by the slow scan feed step and the bitmap mask(s) is (are) applied again to an equal number of lines of print data. The mask is set up in a way so as to having recorded all print data in a band when the mask has completely shifted over that band.

When the resolution of the print data is higher than the resolution of the print head, the print method of the invention can still be applied in an interlaced fashion. In the latter case, the print data is split into complementary subsets of print data, all having the same resolution as the print head. These subsets overlap. The print smoothing method is applied to each of the above subsets of print data separately. Hence, consecutive bands may not belong to the same subset of print data.

The more the print data is filtered, the less ink is used per pass. As the final desired dot size may be obtained by superposition of multiple smaller dots recorded in different passes, a certain dry time is given to the smaller dots. This reduces the amount of ink that is sensitive to coalescence. An optimal balance between print speed and print quality may be determined by the amount of filtering (masking). Furthermore, by allowing ink dots of different size on a single print, a sharper image definition may be obtained.

It is important to note that not every portion of the print data need be filtered the same number of times, i.e. the mask is not applied the same number of times to all the raster lines. The latter case is true when the mask size (number of lines of the smoothing mask) is not a multiple of the slow scan feed step (the number of lines the mask is shifted after each pass). It is hence possible that some raster lines may be scanned only once.

The invention also provides a dot matrix and particularly an ink jet printer which allows to carry out the print method of the invention. As described in the foregoing, the print method of the invention can be carried out by applying to the print data a mask as disclosed above. The mask can be a hardware mask or a software mask and numerous ways of mask implementation are possible and known in the art. The mask can be smaller than the length of the raster lines, in which case the mask is juxtaposed to cover the whole breadth of the print data.

Methods of the invention are particularly advantageous for UV curable or thermally curable inks. When unmasked smaller ink dots are recorded in a first pass (first fast scan), these are generally cured before a second fast scan. Hence, the cured ink dots can act as locations where subsequent larger ink dots remain pinned. As a result, coalescence and migration of ink can be reduced.

## Claims

1. A method of dot matrix printing comprising the steps of:
- applying a mask (20, 30, 40, 50) to a portion of print data to obtain masked print data and unmasked print data, wherein the masked print data in a first region of the portion of print data is arranged to be of larger amount compared to the masked print data in a second region of the portion of print data per unit area,
- recording on a medium the unmasked print data in the form of first ink dots (43, 44) in a first pass of a print head relative to the medium and
- recording on the medium the masked print data in the form of second ink dots in one or more following passes of the print head relative to the medium,
**characterised in that**:
- the step of applying a mask comprises, for one or more pixels of said portion of print data masking a portion of the pixel dot size (23, 24, 25) to obtain an unmasked dot size (43, 44) of smaller size than the pixel dot size and at least one masked dot size,
- the unmasked print data comprises the unmasked dot size (43, 44) and the masked print data comprises the at least one masked dot size,
- the first and second ink dots relating to a same pixel of the portion of print data are superposed and
- the first ink dots and/or the second ink dots comprise ink dots of different size.

2. The method according to claim 1, wherein first ink dots are smaller in size than the size of second ink dots of corresponding pixels.

3. The method according to any one of the preceding claims, wherein arranging the masked print data in the first region to be of larger amount compared to the masked print data in the second region is obtained by said step of masking a portion of the pixel dot size of the one or more pixels.

4. The method according to any one of the preceding claims, wherein the first region is interposed between the second region and the downstream border of data in a pass and wherein in the first region, the print data is masked increasingly from the border with the second region towards said downstream border.

5. The method according to any one of the preceding claims, comprising the step of varying in the first region the amount of masking of the print data along the direction of a pass of the print head according to a predefined profile.

6. The method according to claim 5, wherein said predefined profile comprises a repeating pattern, preferably a sine.

7. The method according to claim 6, wherein the repeating pattern has a length of at least 10 pixels, preferably at least 100 pixels, more preferably at least 200 pixels.

8. The method according to any one of the preceding claims for colour printing with multiple colour channels, wherein the step of masking a portion of the pixel dot size comprises, for each of one or more colour channels of said multiple colour channels, masking a portion of the pixel dot size relating to the corresponding colour channel.

9. The method according to claim 8, wherein unmasked pixel dot sizes relating to the one or more colour channels of a same pixel are as uniform as possible in size.

10. The method according to any one of the preceding claims, wherein after the step of recording the unmasked print data, said unmasked print data is subtracted from the print data and wherein the step of recording the masked print data comprises the steps of shifting said mask over the print data and applying said mask to at least the masked print data.

11. The method according to any one of the preceding claims, wherein the ink is UV curable ink.

12. The method according to any one of the claims 1 to 10, wherein the ink is thermally curable ink.

13. A dot matrix printer comprising:
- means for receiving print data,
- a print head arranged for performing relative to a medium a fast scan in a first direction for recording ink dots of different size on the medium, and a slow scan in a second direction for feeding the medium relative to the print head and
- means (20, 30, 40, 50) for applying a mask to a portion of print data to obtain masked print data and unmasked print data and recording on a medium the unmasked and masked print data as set out in any one of the claims 1 to 10.

14. The dot matrix printer according to claim 13, configured for recording UV curable ink.

15. The dot matrix printer according to claim 14, configured for curing ink after each fast scan.

16. The dot matrix printer according to claim 13, configured for recording thermally curable ink.

## Patentansprüche

1. Punktmatrixdruckverfahren, welches die folgenden Schritte umfasst :
- Anwenden einer Maske (20, 30, 40, 50) auf einen Teil von Druckdaten, um maskierte Druckdaten und nicht maskierte Druckdaten zu erhalten, wobei die maskierten Druckdaten in einem ersten Bereich des Teils von Druckdaten so angeordnet sind, dass sie in einer größeren Menge als die maskierte Druckdaten in einem zweiten Bereich des Teils von Druckdaten pro Flächeneinheit vorliegen,
- Aufzeichnen der nicht maskierten Druckdaten auf einem Medium in Form von ersten Tintenpunkten (43, 44) in einem ersten Durchlauf eines Druckkopfs relativ zum Medium, und
- Aufzeichnen der maskierten Druckdaten auf dem Medium in Form von zweiten Tintenpunkten in einem oder mehreren folgenden Durchläufen des Druckkopfs relativ zum Medium,
**dadurch gekennzeichnet, dass**
- der Schritt des Anwendens einer Maske für ein oder mehrere Pixel des Teils von Druckdaten das Maskieren eines Teils der Pixelpunktgröße (23, 24, 25) umfasst, um eine nicht maskierte Punktgröße (43, 44), die kleiner als die Pixelpunktgröße ist, und zumindest eine maskierte Punktgröße zu erhalten,
- die nicht maskierten Druckdaten die nicht maskierte Punktgröße (43, 44) umfassen, und dass die maskierten Druckdaten die zumindest eine maskierte Punktgröße umfassen,
- die ersten und zweiten Tintenpunkte, die sich auf ein gleiches Pixel des Teils von Druckdaten beziehen, überlagert sind, und
- die ersten Tintenpunkte und/oder die zweiten Tintenpunkte Tintenpunkte unterschiedlicher Größe umfassen.

2. Verfahren nach Anspruch 1, wobei die ersten Tintenpunkte in ihrer Größe kleiner als die zweiten Tintenpunkte von entsprechenden Pixeln sind.

3. Verfahren nach einem der vorherigen Ansprüche, wobei das Anordnen der maskierten Druckdaten im ersten Bereich, die in einer größeren Menge als die maskierten Druckdaten im zweiten Bereich vorliegen sollen, durch den Schritt des Maskierens eines Teils der Pixelpunktgröße des einen oder der mehreren Pixel erzielt wird.

4. Verfahren nach einem der vorherigen Ansprüche, wobei der erste Bereich zwischen dem zweiten Bereich und der nachgeschalteten Grenze von Daten in einem Durchlauf zwischengelagert ist, und wobei die Druckdaten im ersten Bereich zunehmend von der Grenze zum zweiten Bereich hin zur nachgeschalteten Grenze maskiert werden.

5. Verfahren nach einem der vorherigen Ansprüche, umfassend den Schritt des Variierens des Ausmaßes des Maskierens der Druckdaten im ersten Bereich entlang der Richtung eines Durchlaufs des Druckkopfs gemäß einem vordefinierten Profil.

6. Verfahren nach Anspruch 5, wobei das vordefinierte Profil ein sich wiederholendes Muster umfasst, vorzugsweise einen Sinus.

7. Verfahren nach Anspruch 6, wobei das sich wiederholende Muster eine Länge von zumindest 10 Pixeln, vorzugsweise zumindest 100 Pixeln, mehr bevorzugt zumindest 200 Pixeln, aufweist.

8. Verfahren nach einem der vorherigen Ansprüche zum Farbdrucken mit mehreren Farbkanälen, wobei der Schritt des Maskierens eines Teils der Pixelpunktgröße für jeden von einem oder mehreren Farbkanälen der mehreren Farbkanäle das Maskieren eines Teils der Pixelpunktgröße, die sich auf den entsprechenden Farbkanal bezieht, umfasst.

9. Verfahren nach Anspruch 8, wobei nicht maskierte Pixelpunktgrößen, die sich auf den einen oder die mehreren Farbkanäle eines gleichen Pixels beziehen, in Bezug auf ihre Größe so einheitlich wie möglich sind.

10. Verfahren nach einem der vorherigen Ansprüche, wobei nach dem Schritt des Aufzeichnens der nicht maskierten Druckdaten die nicht maskierten Druckdaten aus den Druckdaten subtrahiert werden, und wobei der Schritt des Aufzeichnens der maskierten Druckdaten die Schritte des Verschiebens der Maske über die Druckdaten und des Anwendens der Maske auf zumindest die maskierten Druckdaten umfasst.

11. Verfahren nach einem der vorherigen Ansprüche, wobei es sich bei der Tinte um UV-härtbare Tinte handelt.

12. Verfahren nach einem der Ansprüche 1 bis 10, wobei es sich bei der Tinte um wärmehärtbare Tinte handelt.

13. Punktmatrixdrucker, umfassend:
- Mittel zum Empfangen von Druckdaten,
- einen Druckkopf, der angeordnet ist, um eine schnelle Abtastung in einer ersten Richtung relativ zu einem Medium, um Tintenpunkte unterschiedlicher Größe am Medium aufzuzeichnen, und eine langsame Abtastung in einer zweiten Richtung, um das Medium relativ zum Druckkopf zuzuführen, durchzuführen, und
- Mittel (20, 30, 40, 50) zum Anwenden einer Maske auf einen Teil von Druckdaten, um maskierte Druckdaten und nicht maskierte Druckdaten zu erhalten, und zum Aufzeichnen der nicht maskierten und maskierten Druckdaten auf einem Medium, wie in einem der Ansprüche 1 bis 10 ausgeführt.

14. Punktmatrixdrucker nach Anspruch 13, der konfiguriert ist, um UV-härtbare Tinte aufzuzeichnen.

15. Punktmatrixdrucker nach Anspruch 14, der konfiguriert ist, um Tinte nach jeder schnellen Abtastung zu härten.

16. Punktmatrixdrucker nach Anspruch 13, der konfiguriert ist, um wärmehärtbare Tinte aufzuzeichnen.

## Revendications

1. Procédé d'impression par matrice de points comprenant les étapes consistant à :
- appliquer un masque (20, 30, 40, 50) à une partie des données d'impression pour obtenir des données d'impression masquées et des données d'impression non masquées, dans lequel les données d'impression masquées dans une première région de la partie des données d'impression sont agencées pour être en une quantité supérieure à celle des données d'impression masquées dans une deuxième région de la partie des données d'impression par surface unitaire,
- enregistrer sur un support les données d'impression non masquées sous la forme de premiers points d'encre (43, 44) dans un premier passage d'une tête d'impression par rapport au support, et
- enregistrer sur le support les données d'impression masquées sous la forme de deuxièmes points d'encre dans un ou plusieurs passages suivants de la tête d'impression par rapport au support,
**caractérisé en ce que** :
- l'étape d'application d'un masque comprend, pour un ou plusieurs pixels de ladite partie des données d'impression, le masquage d'une partie de la taille de point de pixel (23, 24, 25) pour obtenir une taille de point non masquée (43, 44) d'une taille inférieure à la taille de point de pixel et au moins une taille de point masquée,
- les données d'impression non masquées comprennent la taille de point non masquée (43, 44) et les données d'impression masquées comprennent ladite au moins une taille de point masquée,
- les premier et deuxième points d'encre concernant un même pixel de la partie des données d'impression sont superposés, et
- les premiers points d'encre et/ou les deuxièmes points d'encre comprennent des points d'encre de différentes tailles.

2. Procédé selon la revendication 1, dans lequel les premiers points d'encre ont une taille inférieure à la taille des deuxièmes points d'encre de pixels correspondants.

3. Procédé selon l'une quelconque des revendications précédentes, dans lequel l'agencement des données d'impression masquées dans la première région en une plus grande quantité comparées aux données d'impression masquées dans la deuxième région est obtenu par ladite étape de masquage d'une partie de la taille de point de pixel desdits un ou plusieurs pixels.

4. Procédé selon l'une quelconque des revendications précédentes, dans lequel la première région est interposée entre la deuxième région et la bordure en aval de données dans un passage, et dans lequel, dans la première région, les données d'impression sont masquées de manière croissante de la bordure avec la deuxième région vers ladite bordure en aval.

5. Procédé selon l'une quelconque des revendications précédentes, comprenant l'étape de modification dans la première région de la quantité de masquage des données d'impression le long de la direction d'un passage de la tête d'impression selon un profil prédéfini.

6. Procédé selon la revendication 5, dans lequel ledit profil prédéfini comprend un motif répétitif, de préférence une sinusoïde.

7. Procédé selon la revendication 6, dans lequel le motif répétitif a une longueur d'au moins 10 pixels, de préférence d'au moins 100 pixels, plus préférablement d'au moins 200 pixels.

8. Procédé selon l'une quelconque des revendications précédentes pour imprimer en couleur avec de multiples canaux de couleur, dans lequel l'étape de masquage d'une partie de la taille de point de pixel comprend, pour chacun d'un ou de plusieurs canaux de couleur desdits multiples canaux de couleur, le masquage d'une partie de la taille de point de pixel concernant le canal de couleur correspondant.

9. Procédé selon la revendication 8, dans lequel les tailles de point de pixel non masquées concernant lesdits un ou plusieurs canaux de couleur d'un même pixel ont une taille aussi uniforme que possible.

10. Procédé selon l'une quelconque des revendications précédentes, dans lequel, après l'étape d'enregistrement des données d'impression non masquées, lesdites données d'impression non masquées sont soustraites des données d'impression, et dans lequel l'étape d'enregistrement des données d'impression masquées comprend les étapes consistant à décaler ledit masque sur les données d'impression et à appliquer ledit masque au moins aux données d'impression masquées.

11. Procédé selon l'une quelconque des revendications précédentes, dans lequel l'encre est une encre durcissable par UV.

12. Procédé selon l'une quelconque des revendications 1 à 10, dans lequel l'encre est une encre durcissable thermiquement.

13. Imprimante par matrice de points comprenant :
- des moyens pour recevoir des données d'impression,
- une tête d'impression agencée pour effectuer en relation avec un support un balayage rapide dans une première direction pour enregistrer des points d'encre de différentes tailles sur le support, et un balayage lent dans une deuxième direction pour avancer le support par rapport à la tête d'impression, et
- des moyens (20, 30, 40, 50) pour appliquer un masque à une partie des données d'impression pour obtenir des données d'impression masquées et des données d'impression non masquées et enregistrer sur un support les données d'impression non masquées et masquées selon l'une quelconque des revendications 1 à 10.

14. Imprimante par matrice de points selon la revendication 13, configurée pour enregistrer une encre durcissable par UV.

15. Imprimante par matrice de points selon la revendication 14, configurée pour durcir l'encre après chaque balayage rapide.

16. Imprimante par matrice de points selon la revendication 13, configurée pour enregistrer une encre durcissable thermiquement.
